# EUROPÄISCHE PATENTSCHRIFT

(11) **EP 0 597 409 B1**
(45) Veröffentlichungstag und Bekanntmachung des Hinweises auf die Patenterteilung: **10.04.1996**
(21) Anmeldenummer: 93118031.9
(22) Anmeldetag: 06.11.1993
(51) Int. Cl.: B60L 9/30

(54) **Mehrsystemfahrzeug**
Multisystem vehicle
Véhicule multisystème

(30) Priorität: 12.11.1992 DE 4238197
(43) Veröffentlichungstag der Anmeldung: 18.05.1994
(73) Patentinhaber: ABB PATENT GmbH, D-68309 Mannheim (DE)
(72) Erfinder: Kielgas, Hans, D-69469 Weinheim (DE); Reichelt, Erich, D-69449 Weinheim (DE)
(74) Vertreter: Rupprecht, Klaus, Dipl.-Ing.

(56) Entgegenhaltungen:
- EP-B- 0 204 690
- DE-C- 3 817 652
- DE-C- 3 915 211
- 4TH EUROPIAN CONF. ON POWER ELECTRONICS AND APPLICATIONS Bd. 4 , 3. September 1991 , FIRENZE Seiten 632 - 637 W. GEISSLER ET AL 'MODELLING THE THREE PHASE PROPULSION SYSTEM OF A MODERN MULTISYSTEM-LOCOMOTIVE'

## Beschreibung

Die Erfindung bezieht sich auf ein Mehrsystemfahrzeug gemäß dem Oberbegriff des Anspruchs 1, wobei das Mehrsystemfahrzeug insbesondere als Schienentriebfahrzeug verwendet wird.

Ein derartiges Mehrsystemfahrzeug ist aus der DE 39 15 211 C2 und der DE 38 17 652 C2 bekannt.

Bei der aus der DE 39 15 211 C2 bekannten Schaltungsanordnung für an Fahrdrahtspannungen verschiedener Systeme betreibbare Mehrsystemfahrzeuge werden die für Wechselstromeinspeisung eingesetzten Vierquadrantensteller bei Gleichstromeinspeisung als Gleichstromsteller (Eingangschopper) verwendet. Beim Gleichstrombetrieb werden die Sekundärwicklungen des Transformators als Stellerdrosseln eingesetzt, wobei die Transformator-Primärwicklung kurzgeschlossen ist.

Aus der EP 02 04 690 B1 ist eine Einspeiseschaltung für den universellen Betrieb elektrischer Triebfahrzeuge an Wechsel- oder Gleichspannungssystemen bekannt, bei der beim Gleichstrombetrieb die Primärwicklung des Transformators kurzgeschlossen ist und die Transformator-Sekundärwicklung über den Gleichstromsteller als Glättungsdrossel zwischen den Eingangs-Netzfilter und einen Zwischenkreiskondensator des Spannungszwischenkreises geschaltet ist, also als Stellerdrossel für den aus Zweigpaaren des Vierquadrantenstellers gebildeten Gleichstromsteller (Hoch- oder Tiefsetzsteller) dient.

Aus der DE 38 17 652 C2 ist ein elektrisch betriebenes Schienentriebfahrzeug (Mehrsystemfahrzeug) bekannt, bei dem beim Gleichspannungsbetrieb die für den Wechselspannungsbetrieb erforderlichen Saugkreise als Eingangsfilter verwendet werden. Die Sekundärwicklungen des Transformators dienen beim Gleichspannungsbetrieb als Stellerdrosseln, wobei die Transformator-Primärwicklungen kurzgeschlossen sind.

Der Erfindung liegt die Aufgabe zugrunde, ein Mehrsystemfahrzeug der eingangs genannten Art anzugeben, bei dem die für den Wechselspannungsbetrieb erforderlichen Leistungsbausteine möglichst effizient auch für den Gleichspannungsbetrieb eingesetzt werden, wobei insbesondere die Kriterien "Gewichtsreduktion" und "Wirtschaftlichkeit" zu beachten sind.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß eine separate, nur bei Gleichspannungseinspeisung eingesetzte Eingangsfilterdrossel mit einem Gewicht von mehreren Tonnen eingespart wird. Die für den Gleichstrombetrieb benötigten Stellerdrosseln wiegen dagegen nur einige 100 kg. Sie werden außerdem z.T. durch die bei Wechselstrombetrieb ohnehin benötigten Saugkreisdrosseln realisiert, so daß sich ingesamt ein großer Gewichts- und Preisvorteil gegenüber den bekannten Einrichtungen ergibt, bei denen jeweils die Sekundärwicklungen des Transformators bei Gleichstrombetrieb als Stellerdrosseln verwendet werden.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Figur 1: den Schaltungszustand eines Schienentriebfahrzeuges mit Vierquadrantensteller, Gleichspannungszwischenkreis und selbstgeführtem Wechselrichter bei Speisung mit einphasiger Wechselspannung,
- Figur 2: den Schaltungszustand eines Schienentriebfahrzeuges mit Eingangssteller, Gleichspannungszwischenkreis und selbstgeführtem Wechselrichter bei Speisung mit Gleichspannung,
- Figur 3: die komplette Schaltung eines universell als Mehrsystem-Triebfahrzeug betreibbaren Schienentriebfahrzeuges mit den erforderlichen Umschaltgeräten,
- Figur 4a: eine erste Transformator-Variante mit Rückschlußschenkel,
- Figur 4b: eine Alternative zur ersten Transformator-Variante,
- Figur 5, 6: zweite Transformator-Varianten mit verstellbarem Luftspalt,
- Figur 7, 8: dritte Transformator-Varianten mit in jedem Schenkel entgegengesetzt gerichteten Flüssen,
- Figur 9: eine Transformatorgehäuse-Variante,
- Figur 10: eine Triebfahrzeug-Ausgestaltung.

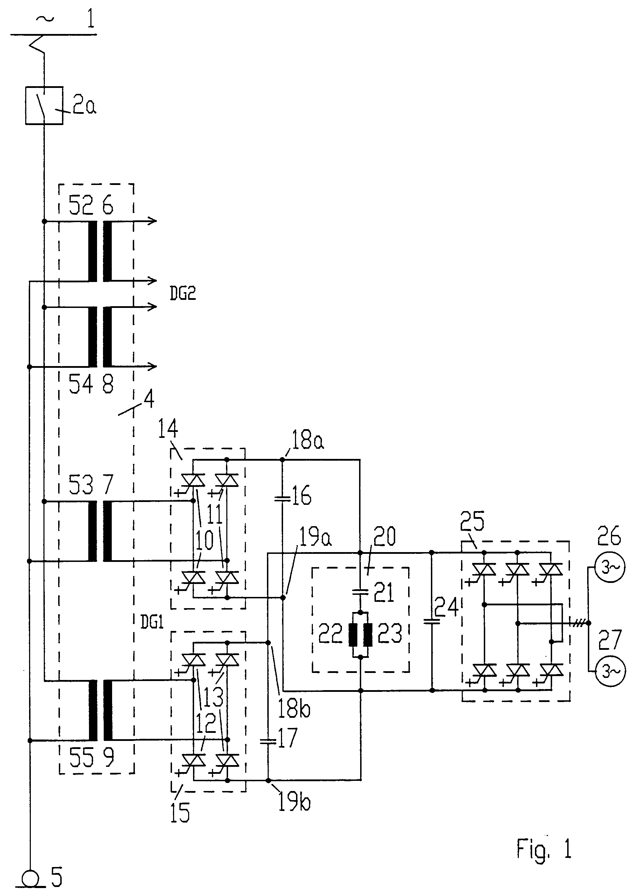

In Figur 1 ist beispielhaft der Schaltungszustand eines Schienentriebfahrzeuges mit Vierquadrantensteller, Gleichspannungszwischenkreis und selbstgeführtem Wechselrichter bei Speisung mit einphasiger Wechselspannung dargestellt. Das Schienentriebfahrzeug ist über einen Wechselspannungs-Fahrdraht 1 und einen Hauptschalter 2a sowie andererseits über das Rad/Schiene-System 5 mit einer Fahrdraht-Wechselspannung beaufschlagbar. Im Fall der Anordnung gemäß Figur 1 wird einphasige Wechselspannung beispielsweise mit 16²/₃ Hz oder 50 Hz Frequenz eingespeist.

Zwischen dem Hauptschalter 2a und dem Rad/Schiene-System 5 sind Primärwicklungen 52, 53, 54, 55 eines Haupttransformators 4 angeordnet. Der Haupttransformator 4 weist vier Sekundärwicklungen 6, 7, 8, 9 auf, wobei die Sekundärwicklung 7 mit den Zweigpaaren 10, 11 eines ersten Vierquadrantenstellers 14 sowie die Sekundärwicklung 9 mit den Zweigpaaren 12, 13 eines zweiten Vierquadrantenstellers 15 verbunden ist.

Die Sekundärwicklungen 7, 9 und die Vierquadrantensteller 14, 15 sind einem ersten Drehgestell DG1 mit zwei Fahrmotoren 26, 27 zugeordnet. Die weiteren Sekundärwicklungen 6, 8 sind mit nicht dargestellten Vierquadrantenstellern eines zweiten Drehgestells DG 2 verbunden.

Die positiven Pole 18a, 18b der Vierquadrantensteller 14, 15 sind miteinander verbunden und bilden den positiven Pol eines Gleichspannungszwischenkreises. Die negativen Pole 19a, 19b der Vierquadrantensteller 14, 15 sind miteinander verbunden und bilden den negativen Pol des Gleichspannungszwischenkreises. Die Kondensatoren 16, 17, 24 bilden die Zwischenkreiskapazität. Ein Kondensator 21 mit in Reihe liegender Parallelschaltung von zwei Drosseln 22, 23 bildet einen Saugkreis 20, der auf die doppelte Frequenz der Fahrdrahtspannung abgestimmt ist.

Ein selbstgeführter Wechselrichter 25 liegt gleichspannungsseitig am Gleichspannungszwischenkreis und speist wechselspannungsseitig (drehspannungsseitig) die Fahrmotoren 26, 27.

Die zur Umgruppierung erforderlichen Schaltgeräte sind aus Gründen der Übersichtlichkeit nicht dargestellt.

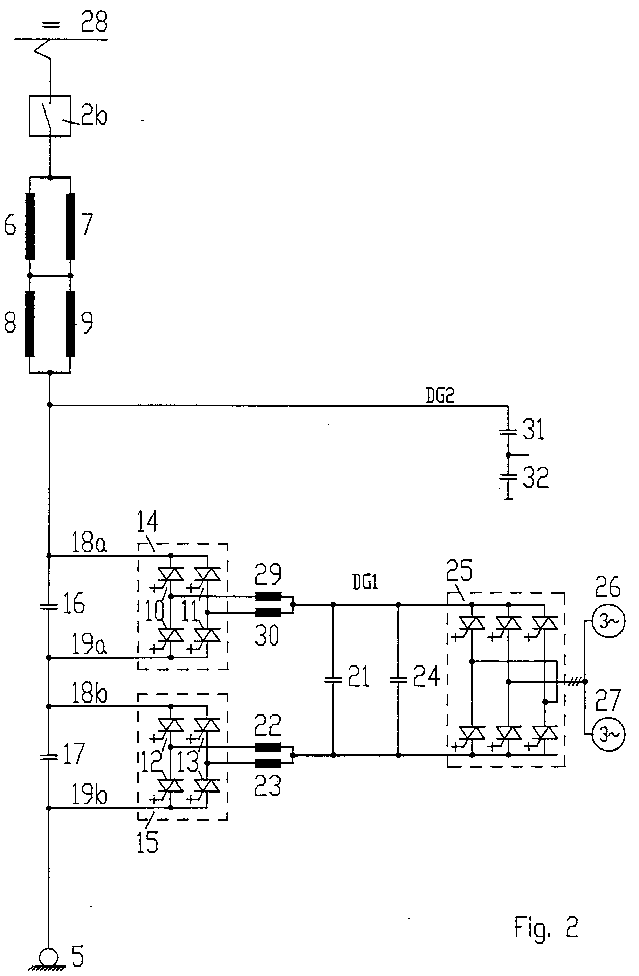

In Figur 2 ist beispielhaft der Schaltungszustand eines Schienentriebfahrzeuges mit Eingangssteller, Gleichspannungszwischenkreis und selbstgeführtem Wechselrichter bei Speisung mit Gleichspannung dargestellt. Es wird eine Gleichspannung als Fahrdrahtspannung eingespeist. Wie aus einem Vergleich der Schaltungsanordnungen gemäß Figuren 1 und 2 hervorgeht, werden bei Figur 2 zum großen Teil die gleichen Leistungsbausteine wie auch bei Figur 1 eingesetzt, es findet lediglich eine Umgruppierung einzelner Bausteine statt. Dabei fungieren die Vierquadrantensteller 14, 15 als Gleichstromsteller (Eingangschopper).

Gemäß Figur 2 dienen die Sekundärwicklungen 6, 7, 8, 9 des Haupttransformators 4 als Eingangsfilterdrosseln und die bei Wechselspannungs-Einspeisung zur Zwischenkreis-Kapazität beitragenden Kondensatoren 16, 17 dienen als Eingangsfilterkondensatoren. Ferner dienen die Drosseln 22, 23 des Saugkreises 20 als Stellerdrosseln und der Kondensator 21 des Saugkreises 20 als Zwischenkreiskondensator. Die Funktion des Zwischenkreiskondensators 24 bleibt unverändert. Im einzelnen sind die Transformator-Sekundärwicklungen 6, 7 und 8, 9 jeweils parallel geschaltet und die Reihenschaltung dieser Drossel-Parallelschaltungen (= Eingangsfilterdrossel) ist einerseits mit dem Hauptschalter 2b, andererseits mit dem Eingangsfilter-Kondensator 16 verbunden. Der Hauptschalter 2b liegt andererseits am Gleichspannungs-Fahrdraht 28. Das Rad/Schiene-System 5 ist über den weiteren Eingangsfilter-Kondensator 17 mit dem Kondensator 16 verbunden.

Der Gleichstromsteller 14 liegt mit seinem positiven Pol 18a bzw. negativen Pol 19a am Eingangsfilter-Kondensator 16. Die Zweigpaare 10 bzw. 11 des Gleichstromstellers 14 sind über eine zusätzliche Stellerdrossel 29 bzw. einer zusätzlichen Stellerdrossel 30 mit dem positiven Pol des Gleichspannungszwischenkreises verbunden. Der Gleichstromsteller 15 liegt mit seinem positiven Pol 18b bzw. negativen Pol 19b am weiteren Eingangsfilter-Kondensator 17. Die Zweigpaare 12 bzw. 13 des Gleichstromstellers 15 sind über die als Stellerdrosseln dienenden Saugkreisdrosseln 22 bzw. 23 mit dem negativen Pol des Gleichspannungszwischenkreises verbunden.

Der Saugkreiskondensator 21 und der Zwischenkreiskondensator 24 bilden die Zwischenkreiskapazität. Der Wechselrichter 25 liegt wiederum gleichspannungsseitig am Gleichspannungszwischenkreis und speist wechselspannungsseitig (drehspannungsseitig) die Fahrmotoren 26, 27.

Die Kondensatoren 16, 17, Gleichstromsteller 14, 15, Drosseln 22, 23, 29, 30, Kondensatoren 21, 24, Wechselrichter 25 und Fahrmotoren 26, 27 sind dem ersten Drehgestell DG1 zugeordnet.

An dem Verbindungspunkt der Eingangsfilterdrossel 6/7/8/9 mit dem Eingangsfilterkondensator 16 ist die Reihenschaltung weiterer, als Eingangsfilterkondensatoren dienender Kondensatoren 31, 32 eines zweiten Drehgestells DG2 angeschlossen.

Die zur Umgruppierung erforderlichen Schaltgeräte sind aus Gründen der Übersichtlichkeit wiederum nicht dargestellt.

Die Gleichstromsteller arbeiten als Tiefsetzsteller, wobei jedes Zweigpaar 10, 11 des Stellers 14 bzw. 12, 13 des Stellers 15 getrennt getaktet wird, d.h. die einzelnen Zweigpaare werden zur Erreichung einer höheren resultierenden Pulsfrequenz versetzt getaktet.

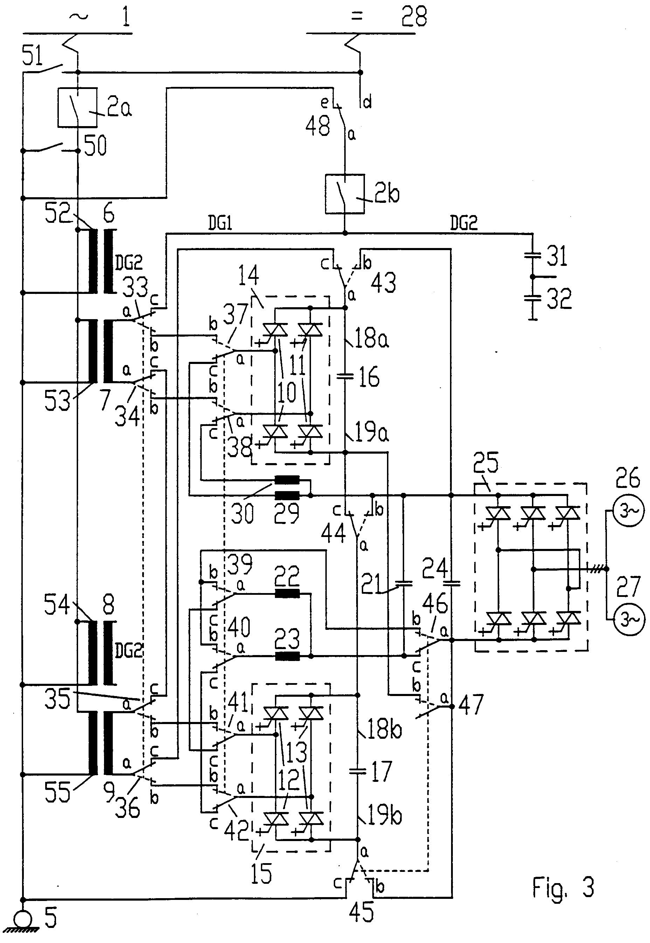

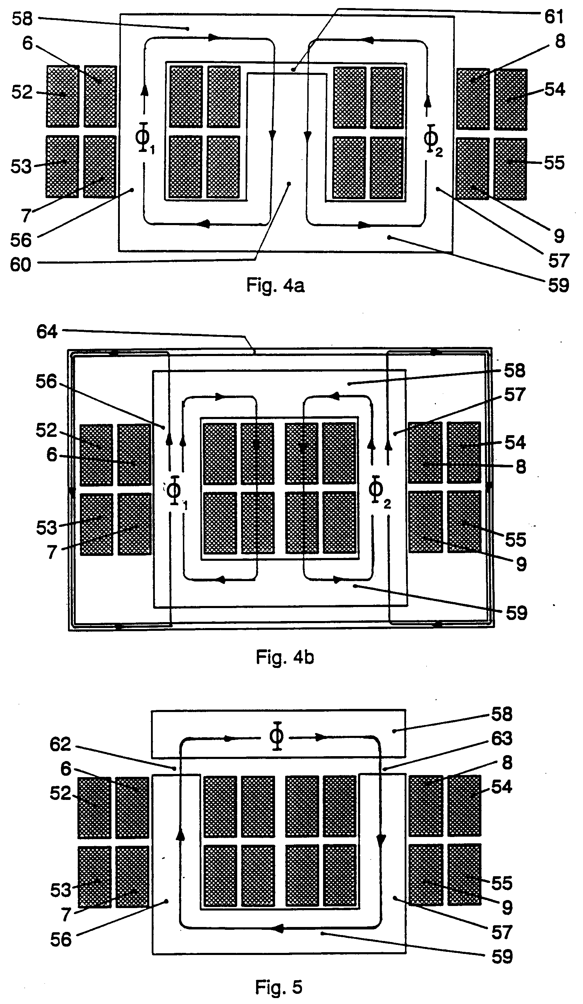

In Figur 3 ist die komplette Schaltung eines universell als Mehrsystem-Triebfahrzeug betreibbaren Schienentriebfahrzeuges mit den erforderlichen Umschaltgeräten dargestellt. Die gezeigte Anordnung ist lediglich beispielhaft, d.h. es sind je nach eingesetzter Transformator-Variante (siehe Figuren 4 bis 8) andere Anordnungen notwendig bzw. möglich. In der Grundstruktur sind die vorstehend erwähnten Baukomponenten Hauptschalter 2a, 2b, Haupttransformator 4 mit Primärwicklungen 52, 53, 54, 55 und Sekundärwicklungen (als Eingangsfilterdrossel) 6, 7, 8, 9, Eingangssteller 14 (Vierquadrantensteller oder Gleichstromsteller) mit Zweigpaaren 10, 11 sowie Eingangssteller 15 (Vierquadrantensteller oder Gleichstromsteller) mit Zweigpaaren 12, 13, Kondensatoren 16, 17 (Zwischenkreiskondensatoren oder Eingangsfilterkondensatoren), 21 (Saugkreiskondensator oder Zwischenkreiskondensator), 24 (stets Zwischenkreiskondensator), 31, 32 (Zwischenkreiskondensatoren oder Eingangsfilterkondensatoren des zweiten Drehgestells), Drosseln 22, 23 (Saugkreisdrosseln oder Stellerdrosseln), 29, 30 (nur Stellerdrosseln), Wechselrichter 25, Fahrmotoren 26, 27, Rad/Schiene-System 5 und Wechselspannungs-Fahrdraht 1 bzw. Gleichspannungs-Fahrdraht 28 gezeigt.

Zusätzlich sind die zur Umgruppierung der Leistungsbausteine erforderlichen Schaltgeräte, die Umschalter 33 bis 47, dargestellt. Dabei sind bei allen Umschaltern jeweils die feststehenden Pole mit a und die beiden schaltbaren Pole mit b und c gekennzeichnet, wobei die Verbindungen a-b jeweils bei Wechselstromeinspeisung und die Verbindungen a-c jeweils bei Gleichstromeinspeisungen geschlossen werden.

Der Pol a eines Umschalters 33 ist mit dem ersten Anschluß der Sekundärwicklung 7 verbunden. Der Pol b dieses Umschalters 33 führt zum Pol b eines Umschalters 37. Der Pol c des Umschalters 33 ist an den Hauptschalter 2b angeschlossen.

Der Pol a eines Umschalters 34 ist mit dem zweiten Anschluß der Sekundärwicklung 7 verbunden. Der Pol b dieses Umschalters 34 führt zum Pol b eines Umschalters 38. Der Pol c des Umschalters 34 ist an den Pol c eines Umschalters 35 angeschlossen.

Der Pol a des Umschalters 35 ist mit dem ersten Anschluß der Sekundärwicklung 9 verbunden. Der Pol b dieses Umschalters 35 führt zum Pol b eines Umschalters 41.

Der Pol a eines Umschalters 36 ist mit dem zweiten Anschluß der Sekundärwicklung 9 verbunden. Der Pol b dieses Umschalters 36 führt zum Pol b eines Umschalters 42. Der Pol c des Umschalters 36 ist an den Pol c eines Umschalters 43 angeschlossen.

Der Pol a des Umschalters 37 ist mit dem Zweigpaar 10 verbunden. Der Pol c dieses Umschalters 37 führt zum ersten Anschluß der Drossel 29.

Der Pol a des Umschalters 38 ist mit dem Zweigpaar 11 verbunden. Der Pol c dieses Umschalters 38 führt zum ersten Anschluß der Drossel 30.

Der Pol a eines Umschalters 39 ist mit dem ersten Anschluß der Drossel 22 verbunden. Der Pol b dieses Umschalters 39 führt zu den Polen b von Umschaltern 40 und 46. Der Pol c des Umschalters 39 ist an den Pol c des Umschalters 41 angeschlossen.

Der Pol a des Umschalters 40 ist mit dem ersten Anschluß der Drossel 23 verbunden. Der Pol c dieses Umschalters 40 führt zum Pol c des Umschalters 42.

Der Pol a des Umschalters 41 ist mit dem Zweigpaar 12 verbunden, während der Pol a des Umschalters 42 an das Zweigpaar 13 angeschlossen ist.

Der Pol a des Umschalters 43 ist mit dem positiven Pol 18a des Eingangsstellers 14 und dem ersten Anschluß des Kondensators 16 verbunden. Der Pol b dieses Umschalters 43 führt zum positiven Pol des Gleichspannungszwischenkreises, zum positiven Anschluß des Wechselrichters 25, zu den ersten Anschlüssen der Kondensatoren 21, 24, zu den zweiten Anschlüssen der Drosseln 29, 30 und zum Pol b eines Umschalters 44.

Der Pol a des Umschalters 44 ist mit dem positiven Pol 18b des Eingangsstellers 15 und dem ersten Anschluß des Kondensators 17 verbunden. Der Pol c dieses Umschalters 44 führt zum negativen Pol 19a des Eingangsstellers 14, zum zweiten Anschluß des Kondensators 16 und zum Pol b eines Umschalters 47.

Der Pol a eines Umschalters 45 ist mit dem negativen Pol 19b des Eingangsstellers 15 und dem zweiten Anschluß des Kondensators 17 verbunden. Der Pol b dieses Umschalters 45 führt zu den Polen a der Umschalter 46, 47 und zum negativen Pol des Gleichspannungszwischenkreises, zum negativen Anschluß des Wechselrichters 25 und zum zweiten Anschluß des Kondensators 24. Der Pol c des Umschalters 45 ist an das Rad/Schiene-System 5, den zweiten Anschluß der Transformator-Primärwicklungen 52 bis 55, einen schaltbaren Pol e eines Erdungsschalters 48 sowie die ersten Anschlüsse von Erdungsschaltern 50, 51 angeschlossen.

Der Pol c des Umschalters 46 ist mit dem zweiten Anschluß des Kondensators 21 und den zweiten Anschlüssen der Drosseln 22, 23 verbunden.

Der erste Anschluß der Transformator-Primärwicklungen 52 bis 55 ist mit den zweiten Anschlüssen des Erdungsschalters 50 und des Hauptschalters 2a verbunden. Der Wechselspannungs-Fahrdraht 1 ist mit den ersten Anschlüssen des Hauptschalters 2a und des Erdungsschalters 51 verbunden. Ferner besteht eine Verbindung zwischen dem gemeinsamen Verbindungspunkt Schalter 51/Hauptschalter 2a/Wechselspannungs-Fahrdraht 1 und dem schaltbaren Pol d des Erdungsschalters 48, an den der Gleichspannungs-Fahrdraht 28 angeschlossen ist. Der feststehende Pol a dieses Erdungsschalters 48 führt zum ersten Anschluß des Hauptschalters 2b.

Die Anschlüsse der dem Drehgestell DG2 zugeordneten Leistungskomponenten sind jeweils angedeutet (siehe Sekundärwicklungen 6, 8 und Anschluß an Hauptschalter 2b).

Wie vorstehend beschrieben, werden die Sekundärwicklungen 6 bis 9 des Haupttransformators 4 bei Speisung mit Gleichspannung als Eingangsfilterdrossel verwendet. Allgemein ist es deshalb wichtig, daß der Haupttransformator sowohl bei Wechselspannungseinspeisung als auch bei Gleichstromeinspeisung des Mehrsystemfahrzeuges optimal betrieben werden kann und dementsprechend ausgestaltet ist.

Die Höhe des dabei zu führenden Gleichstromes erfordert in vielen Fällen die Parallelschaltung von zwei Sekundärwicklungen (z.B. Wicklungen 6 und 7 gemäß Figur 2), die beiden weiteren Sekundärwicklungen (z.B. Wicklungen 8 und 9 gemäß Figur 2) können - ebenfalls parallelgeschaltet - dazu in Reihe geschaltet werden. In Abhängigkeit von der Ausführung des Transformators und der Verschaltung der Sekundärwicklungen ergibt sich eine unterschiedliche Führung des Gleichflusses, wie die nachstehend unter den Figuren 4 bis 8 beschriebenen Varianten zeigen. Prinzipiell ist es bei Gleichstromeinspeisung erforderlich, daß der Fluß streckenweise durch Luft geht, um Sättigung des Eisenkerns und damit Nichtlinearität der Drosselkennlinie zu vermeiden. Andererseits muß ein zu starkes Austreten des Flusses aus dem Nahbereich des Transformators (Filterdrossel) vermieden werden, um Störbeeinflussungen - beispielsweise von Signalanlagen oder im Fahrzeug selbst - zu vermeiden.

In Figur 4a ist eine erste Transformator-Variante mit Rückschlußschenkel dargestellt. Es ist ein Transformator mit zwei Schenkeln 56, 57 und zwei Jochen 58, 59 zu erkennen. Die Gleichstromeinspeisung der Sekundärwicklungen 6 bis 9 ist derart geschaltet, daß die durch die Gleichstromdurchflutung erzeugten Gleichflüsse Φ1 und Φ2 in beiden Transformatorschenkeln 56, 57 gleich gerichtet sind (nach oben oder nach unten). Zur Rückleitung der Gleichflüsse Φ1 und Φ2 sind ein oder mehrere Rückschlußschenkel 60 vorgesehen. Ein oder mehrere Luftspalte 61 verhindern, daß das Eisen in die Sättigung geht.

Bei allen Anwendungen (Figuren 4a, 4b, 5, 6, 7, 8) sind die Primärwicklungen entweder offen oder so miteinander verbunden, daß kein Kurzschluß der in den Sekundärwicklungen induzierten Spannungen entsteht.

Um unzulässige Überspannungen in den Primärwicklungen zu vermeiden, die entstehen können, wenn kurzzeitige Spannungsspitzen in der Gleichstromfahrleitung auftreten, werden die Primärwicklungen durch Überspannungsableiter, z.B. nichtlineare Widerstände, geschützt.

In Figur 4b ist eine Alternative zur ersten Transformator-Variante dargestellt, bei der die Rückleitung der Gleichflüsse Φ1 und Φ2 teilweise durch ein mit genügender Wandstärke ausgeführtes Transformatorgehäuse 64 aus magnetischem Stahl erfolgt. Der oder die Rückschlußschenkel können damit entfallen und außerdem wird eine magnetische Abschirmung der Streufelder erreicht.

In einer weiteren Variante, die nicht bildlich dargestellt ist, wird sowohl ein Rückschlußschenkel (mit kleinerem Querschnitt als bei der Variante gemäß Figur 4a) und ein Gehäuse aus magnetischem Stahl (mit kleinerer Wandstärke als bei der Variante gemäß Figur 4b) eingesetzt.

In Figur 5 ist eine zweite Transformator-Variante mit verstellbarem Luftspalt dargestellt. Es ist ein Transformator mit zwei Schenkeln 56, 57 und zwei Jochen 58, 59 zu erkennen. Die Gleichstromeinspeisung der Sekundärwicklungen 6 bis 9 ist derart geschaltet, daß der durch die Gleichstromdurchflutung erzeugte Gleichfluß Φ in beiden Transformatorschenkeln 56, 57 entgegengesetzt gerichtet ist. Eines der beiden Joche 58 oder 59 (gemäß Figur 5 Joch 58) wird bei Gleichstromeinspeisung von den Schenkeln 56, 57 derart abgehoben, daß Luftspalte 62, 63 entstehen, die eine Sättigung des Eisens verhindern. In einer weiteren Variante können auch beide Joche abgehoben werden.

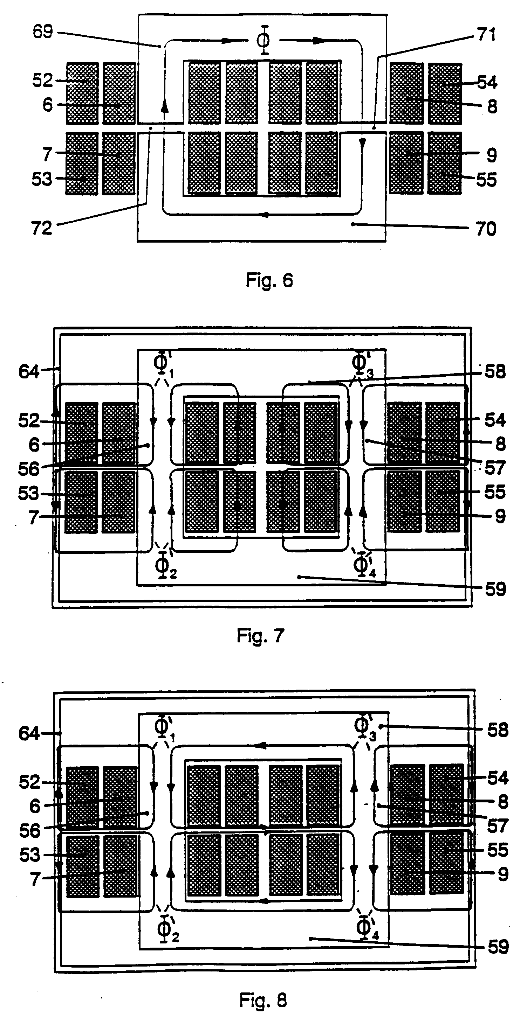

In Figur 6 ist eine Alternative zur zweiten Transformator-Variante gemäß Figur 5 dargestellt. Bei dieser Alternative ist der Eisenkern des Transformators in zwei spiegelsymmetrische Teilstücke 69, 70 unterteilt, wobei die Spiegelachse bzw. -fläche parallel zu den Jochen verläuft. Zwischen den "durchtrennten" Schenkeln des Eisenkerns werden bei Gleichstromeinspeisung Luftspalte 71, 72 gebildet, die eine Sättigung des Eisens verhindern. Allgemein ist es auch möglich, den Eisenkern nicht in symmetrische Hälften, sondern in unsymmetrische Teilstücke zu unterteilen und Luftspalte zwischen diesen Teilstücken vorzusehen. Eine mechanische Verstelleinrichtung dient zur präzisen Einstellung der Luftspalte bei Gleichstromeinspeisung.

Auch in den Varianten nach Figur 5 und 6 kann zusätzlich ein Gehäuse aus magnetischem Stahl eingesetzt werden.

In den Figuren 7 und 8 sind dritte Transformator-Varianten dargestellt, bei denen die Gleichstromeinspeisung der Sekundärwicklungen 6 bis 9 so erfolgt, daß die von den Sekundärwicklungen in einem Schenkel erzeugten Gleichflüsse jeweils entgegengesetzt gerichtet sind. Dadurch werden die Gleichflüsse Φ1', Φ2', Φ3', Φ4' gezwungen, in den Spalten zwischen den Spulen eines Schenkels 56, 57 aus dem Eisen auszutreten. Somit wird erreicht, daß die Flüsse streckenweise durch Luft gehen, ohne daß der Eisenkern selbst, bestehend aus den Schenkeln 56, 57 und den Jochen 58, 59, einen oder mehrere Luftspalte aufweist.

Um eine magnetische Abschirmung der Streuflüsse zu erreichen, ist es vorteilhaft, das Transformatorengehäuse 64 aus magnetischem Stahl auszuführen, wobei die Wandstärke in der Nähe des Außenumfangs der Spulen entsprechend groß sein muß, um Sättigung zu vermeiden.

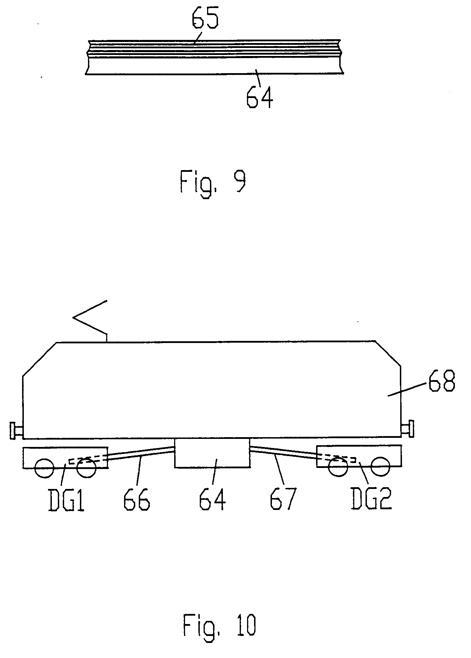

In Figur 9 ist eine Transformatorgehäuse-Variante dargestellt, wie sie bereits vorstehend angedeutet ist. Das Transformatorgehäuse 64 besteht aus magnetischem Stahl mit geringer Wandstärke oder aus Aluminium, wobei zusätzlich an den Gehäusewänden lamellierte, magnetisch leitende Bleche 65 angebracht sind, die im Gleichstrombetrieb einen Teil des magnetischen Rückflusses und im Wechselstrombetrieb den Wechselstreufluß aufnehmen, so daß eine unzulässige Erwärmung des Transformatorkessels durch den Wechselstreufluß vermieden wird.

In Figur 10 ist eine Triebfahrzeug-Ausgestaltung dargestellt, wie sie insbesondere bei der in den Figuren 4b, 7 und 8 erwähnten Ausbildung des Transformatorgehäuses 64 mit entsprechend dicker Wandstärke vorteilhaft realisierbar ist. Das aus magnetischen Gründen mit großer Wandstärke ausgeführte Transformatorengehäuse 64 wird als tragendes Element des Triebfahrzeuges ausgebildet, das beispielsweise zur Befestigung von Zugstangen 66, 67 dienen kann, die die Zugkräfte von den Drehgestellen DG1, DG2 auf den Triebfahrzeugkasten 68 übertragen.

## Patentansprüche

1. Elektrisch betriebenes Mehrsystemfahrzeug mit mindestens einer Antriebsanlage, die einen oder mehrere Vierquadrantensteller (14,15), einen Gleichspannungszwischenkreis mit Zwischenkreiskondensator (16,17,24), einen auf doppelte Netzfrequenz abgestimmten Saugkreis (20) und einen oder mehrere selbstgeführte Wechselrichter (25) zur Speisung eines oder mehrerer Fahrmotoren (26,27) mit variabler Spannung und Frequenz aufweist, wobei bei Wechselspannungseinspeisung jeder Vierquadrantensteller (14,15) an einer eigenen Sekundärwicklung (6 bis 9) eines Transformators (4) liegt und bei Gleichspannungseinspeisung ein Eingangsfilter eingesetzt und die Vierquadrantensteller (14,15) als Gleichstromsteller verwendet werden, dadurch gekennzeichnet, daß mindestens eine Sekundärwicklung (6 bis 9) des Transformators (4) bei Gleichstromeinspeisung als Eingangsfilterdrossel verwendet wird, wobei die Primärwicklungen offen oder so miteinander verbunden sind, daß kein Kurzschluß der in den Sekundärwicklungen induzierten Spannungen entsteht.

2. Mehrsystemfahrzeug nach Anspruch 1, dadurch gekennzeichnet, daß die Primärwicklungen durch Überspannungsableiter gegen unzulässige, kurzzeitige Überspannungen geschützt sind.

3. Mehrsystemfahrzeug nach Anspruch 1 und/oder 2, dadurch gekennzeichnet, daß bei Gleichstromeinspeisung ein Teil der Zwischenkreiskondensatoren (16,17) als Eingangsfilterkondensatoren verwendet und der Saugkreiskondensator (21) parallel zum verbleibenden Zwischenkreiskondensator (24) geschaltet wird.

4. Mehrsystemfahrzeug nach wenigstens einem der Ansprüche 1 bis 3, dadurch gekennzeichnet, daß bei Gleichstromeinspeisung die Saugkreisdrosseln (22,23) als Stellerdrosseln verwendet werden.

5. Mehrsystemfahrzeug nach Anspruch 4, dadurch gekennzeichnet, daß bei Gleichstromeinspeisung jedes der Zweigpaare (10 bis 13) der Gleichstromsteller (14,15) über je eine Stellerdrossel (22,23,29,30) mit dem Plus- bzw. Minuspol des Gleichspannungszwischenkreises verbunden ist und daß die einzelnen Zweigpaare (10 bis 13) der Gleichstromsteller (14,15) zur Erreichung einer höheren resultierenden Pulsfrequenz versetzt getaktet werden.

6. Mehrsystemfahrzeug nach wenigstens einem der Ansprüche 1 bis 5, dadurch gekennzeichnet, daß bei Gleichstromeinspeisung die Sekundärwicklungen (6 bis 9) des Transformators (4) derart geschaltet sind, daß die durch Gleichstromdurchflutung erzeugten Gleichflüsse in beiden Schenkeln (56,57) des Transformators gleich gerichtet sind und daß ein oder mehrere Rückschlußschenkel (60) des Transformators vorgesehen sind, die die Summe der Flüsse aufnehmen, wobei ein oder mehrere Luftspalte (61) verhindern, daß das Eisen in die Sättigung geht (Figur 4a).

7. Mehrsystemfahrzeug nach wenigstens einem der Ansprüche 1 bis 5, dadurch gekennzeichnet, daß bei Gleichstromeinspeisung die Sekundärwicklungen (6 bis 9) des Transformators (4) derart geschaltet sind, daß die durch die Gleichstromdurchflutung erzeugten Gleichflüsse in beiden Schenkeln (56,57) des Transformators gleich gerichtet sind und daß der magnetische Rückfluß durch das Transformatorgehäuse (64) erfolgt (Figur 4b).

8. Mehrsystemfahrzeug nach den Ansprüchen 6 und 7, dadurch gekennzeichnet, daß zur Führung des magnetischen Rückflusses sowohl ein oder mehrere Rückschlußschenkel mit ein oder mehreren Luftspalten als auch ein magnetisch leitendes Transformatorgehäuse vorgesehen sind.

9. Mehrsystemfahrzeug nach wenigstens einem der Ansprüche 1 bis 5, dadurch gekennzeichnet, daß bei Gleichstromeinspeisung die Sekundärwicklungen (6 bis 9) des Transformators (4) derart geschaltet sind, daß die durch die Gleichstromdurchflutung erzeugten Gleichflüsse in beiden Schenkeln (56,57) des Transformators entgegengesetzt gerichtet sind und daß eines der beiden oder beide Joche (58,59) des Transformators bei Gleichstromeinspeisung von den Schenkeln (56,57) des Transformators derart abgehoben wird oder werden, daß Luftspalte (62,63) entstehen, die eine Sättigung des Eisens verhindern (Figur 5).

10. Mehrsystemfahrzeug nach wenigstens einem der Ansprüche 1 bis 5, dadurch gekennzeichnet, daß bei Gleichstromeinspeisung die Sekundärwicklungen (6 bis 9) des Transformators (4) derart geschaltet sind, daß die durch die Gleichstromdurchflutung erzeugten Gleichflüsse in beiden Schenkeln (56,57) des Transformators entgegengesetzt gerichtet sind und daß der Eisenkern in zwei Teilstücke (69,70) unterteilt ist, wobei Luftspalte (71,72) zwischen diesen Teilstücken entstehen, die eine Sättigung des Eisens verhindern (Figur 6).

11. Mehrsystemfahrzeug nach wenigstens einem der Ansprüche 1 bis 5, dadurch gekennzeichnet, daß bei Gleichstromeinspeisung die Sekundärwicklungen (6 bis 9) des Transformators (4) derart geschaltet sind, daß die durch die Gleichstromdurchflutung erzeugten Gleichflüsse in jedem der Schenkel (56,57) des Transformators entgegengesetzt gerichtet sind (Figuren 7, 8).

12. Mehrsystemfahrzeug nach wenigstens einem der Ansprüche 6 bis 10, dadurch gekennzeichnet, daß ein Transformatorgehäuse (64) aus magnetischem Stahl mit genügender Wandstärke vorgesehen ist, das mindestens einen Teil des magnetischen Rückflusses aufnehmen kann, ohne in die Sättigung zu gehen.

13. Mehrsystemfahrzeug nach wenigstens einem der Ansprüche 6 bis 10, dadurch gekennzeichnet, daß ein Transformatorgehäuse (64) aus magnetischem Stahl mit geringer Wandstärke oder aus Aluminium vorgesehen ist, wobei zusätzlich an den Gehäusewänden lamellierte, magnetisch leitende Bleche (65) angebracht sind, die im Gleichstrombetrieb mindestens einen Teil des magnetischen Rückflusses und im Wechselstrombetrieb den Wechselstreufluß aufnehmen, so daß eine unzulässige Erwärmung des Transformatorgehäuses durch den Wechselstreufluß vermieden wird (Figur 9).

14. Mehrsystemfahrzeug nach Anspruch 12, dadurch gekennzeichnet, daß das aus magnetischen Gründen mit großer Wandstärke ausgeführte Transformatorgehäuse (64) als tragendes Element des Fahrzeuges ausgebildet ist, das vorzugsweise zur Befestigung von Zugstangen (66,67) dienen kann, die die Zugkräfte von Drehgestellen (DG1,DG2) auf den Fahrzeugkasten (68) übertragen (Figur 10).

## Claims

1. Electrically operated multisystem vehicle having at least one drive system which has one or more four-quadrant actuators (14, 15), one intermediate d.c. circuit with intermediate circuit capacitor (16, 17, 24), one series resonant circuit (20) which is tuned to twice the mains frequency and one or more self-commutated power inverters (25) for supplying one or more traction motors (26, 27) with variable voltage and frequency, in which case when alternating voltage is supplied each four-quadrant actuator (14, 15) is connected to its own secondary winding (6 to 9) of a transformer (4) and when d.c. voltage is supplied an input filter is used and the four-quadrant actuators (14, 15) are used as d.c. chopper controllers, characterized in that at least one secondary winding (6 to 9) of the transformer (4) is used as input filter inductor when d.c. current is being supplied, the primary windings being open or being connected to one another in such a way that there is no short-circuit of the voltages induced in the secondary windings.

2. Multisystem vehicle according to Claim 1, characterized in that the primary windings are protected against unacceptable, brief voltage surges by means of surge voltage protectors.

3. Multisystem vehicle according to Claim 1 and/or 2, characterized in that when d.c. current is being supplied some of the intermediate circuit capacitors (16, 17) are used as input filter capacitors and the series resonant circuit capacitor (21) is connected parallel to the remaining intermediate circuit capacitor (24).

4. Multisystem vehicle according to at least one of Claims 1 to 3, characterized in that when d.c. current is supplied the series resonant circuit inductors (22, 23) are used as controller inductors.

5. Multisystem vehicle according to Claim 4, characterized in that when d.c. current is supplied each of the pairs of branches (10 to 13) of the d.c. actuators (14, 15) is connected via in each case one controller inductor (22, 23, 29, 30) to the positive pole or negative pole of the d.c. intermediate circuit, and in that the individual pairs of branches (10 to 13) of the d.c. actuators (14, 15) are clocked in an offset manner in order to achieve a higher resultant pulse frequency.

6. Multisystem vehicle according to at least one of Claims 1 to 5, characterized in that when d.c. current is supplied the secondary windings (6 to 9) of the transformer (4) are connected in such a way that the unidirectional fluxes generated as a result of d.c. current flowing through are in the same direction in both limbs (56, 57) of the transformer, and in that one or more return limbs (60) of the transformer are provided, which return limbs (60) absorb the sum of the fluxes, one or more air gaps (61) preventing the iron going into the saturated state (Figure 4a).

7. Multisystem vehicle according to at least one of Claims 1 to 5, characterized in that when d.c. current is supplied the secondary windings (6 to 9) of the transformer (4) are connected in such a way that the unidirectional fluxes generated by the d.c. current flowing through are in the same direction in both limbs (56, 57) of the transformer, and in that the magnetic return path passes via the transformer housing (64) (Figure 4b).

8. Multisystem vehicle according to Claims 6 and 7, characterized in that both one or more than one return limbs with one or more air gaps and one magnetically permeable transformer housing are provided in order to direct the magnetic return path.

9. Multisystem vehicle according to at least one of Claims 1 to 5, characterized in that when d.c. current is supplied the secondary windings (6 to 9) of the transformer (4) are connected in such a way that the unidirectional fluxes generated as a result of the d.c. current flowing through are in opposite directions in the two limbs (56, 57) of the transformer, and in that when d.c. current is supplied one of the two, or both, yokes (58, 59) of the transformer is or are lifted off from the limbs (56, 57) of the transformer in such a way that air gaps (62, 63), which prevent saturation of the iron (Figure 5), are produced.

10. Multisystem vehicle according to at least one of Claims 1 to 5, characterized in that when d.c. current is supplied the secondary windings (6 to 9) of the transformer (4) are connected in such a way that the unidirectional fluxes generated as a result of the d.c. current flowing through are in opposite directions in the two limbs (56, 57) of the transformer, and in that the iron core is divided into two sub-elements (69, 70), air gaps (71, 72) which prevent saturation of the iron (Figure 6) being produced between these sub-elements.

11. Multisystem vehicle according to at least one of Claims 2 to 6, characterized in that when d.c. current is supplied the secondary windings (6 to 9) of the transformer (4) are connected in such a way that the unidirectional fluxes generated as a result of the d.c. current flowing through are in opposite directions in each of the limbs (56, 57) of the transformer (Figures 7, 8).

12. Multisystem vehicle according to at least one of Claims 6 to 10, characterized in that a transformer housing (64) made of magnetic steel with walls of a sufficient thickness is provided, which transformer housing (64) can absorb at least some of the magnetic return without going into the saturated state.

13. Multisystem vehicle according to at least one of Claims 6 to 10, characterized in that a transformer housing (64) made of magnetic steel with walls which have a low degree of thickness or are made of aluminium is provided, laminated, magnetically permeable metal plates (65) being additionally attached to the walls of the housing, which metal plates (65) absorb at least some of the magnetic return during d.c. current operation and absorb the alternating leakage flux during alternating current operation so that unacceptable heating of the transformer housing as a result of the alternating leakage flux is avoided (Figure 9).

14. Multisystem vehicle according to Claim 12, characterized in that the transformer housing (64) which is realized with walls of a high degree of thickness for magnetic reasons is constructed as a load-bearing element of the vehicle which can preferably serve for the attachment of tie rods (66, 67) which transmit the tensile forces of the bogies (DG1, DG2) to the body (68) of the vehicle (Figure 10).

## Revendications

1. Véhicule électrique polycourant comportant au moins une installation de propulsion qui comprend un ou plusieurs régulateurs (14, 15) à quatre quadrants, un circuit intermédiaire à tension continue avec condensateur de circuit intermédiaire (16, 17, 24), un circuit d'absorption (20) accordé sur une fréquence double de la fréquence du réseau et un ou plusieurs onduleurs (25) à commutation automatique pour alimenter un ou plusieurs moteurs de traction (26, 27) sous une tension et une fréquence variables, chaque régulateur (14, 15) à quatre quadrants étant connecté à un enroulement secondaire (6 à 9) propre d'un transformateur (4) dans le cas d'une alimentation en tension alternative et un filtre d'entrée et les régulateurs (14, 15) à quatre quadrants étant utilisés comme régulateurs à courant continu dans le cas d'une alimentation en tension continue, caractérisé par le fait que, dans le cas d'une alimentation en courant continu, au moins un enroulement secondaire (6 à 9) du transformateur (4) est utilisé comme bobine filtre d'entrée, les enroulements primaires étant ouverts ou connectés entre eux de manière telle qu'il n'y ait pas de court-circuit des tensions induites dans les enroulements secondaires.

2. Véhicule électrique polycourant selon la revendication 1, caractérisé par le fait que les enroulements primaires sont protégés contre les surtensions non admissibles, de courte durée, par des dispositifs de dérivation des surtensions.

3. Véhicule électrique polycourant selon la revendication 1 et/ou la revendication 2, caractérisé par le fait que, dans le cas d'une alimentation en courant continu, on utilise une partie des condensateurs (16, 17) du circuit intermédiaire comme condensateurs de filtrage d'entrée et on connecte le condensateur (21) du circuit d'absorption en parallèle avec le condensateur (24) de circuit intermédiaire restant.

4. Véhicule électrique polycourant selon au moins une des revendications 1 à 3, caractérisé par le fait que, dans le cas d'une alimentation en courant continu, on utilise les bobines d'induction (22, 23) du circuit d'absorption comme bobines de régulateur.

5. Véhicule électrique polycourant selon la revendication 4, caractérisé par le fait que, dans le cas d'une alimentation en courant continu, chacune des paires (10 à 13) formant les branches du régulateur (14, 15) à courant continu est connectée par l'intermédiaire chaque fois d'une bobine de régulateur (22, 23, 29, 30) au pôle positif ou au pôle négatif du circuit intermédiaire à tension continue et par le fait que les différentes paires (10 à 13) des régulateurs (14, 15) à courant continu sont cadencées avec un décalage afin d'obtenir une fréquence pulsatoire résultante plus élevée.

6. Véhicule électrique polycourant selon au moins une des revendications 1 à 5, caractérisé par le fait que, dans le cas d'une alimentation en courant continu, les enroulements secondaires (6 à 9) du transformateur (4) sont connectés de manière telle que les courants générés dans les deux branches (56, 57) du transformateur par la circulation du courant continu soient dirigés dans le même sens et qu'il est prévu une ou plusieurs branches de retour (60) du transformateur qui reçoivent la somme des courants, un ou plusieurs entrefers (61) empêchant la saturation du fer (figure 4a).

7. Véhicule électrique polycourant selon au moins une des revendications 1 à 5, caractérisé par le fait que, dans le cas d'une alimentation en courant continu, les enroulements secondaires (6 à 9) du transformateur (4) sont connectés de manière telle que les courants générés dans les deux branches (56, 57) du transformateur par la circulation du courant continu soient dirigés dans le même sens et que le retour magnétique ait lieu par le boîtier du transformateur (64) (figure 4b).

8. Véhicule électrique polycourant selon les revendication 6 et 7, caractérisé par le fait qu'il est prévu pour assurer le retour magnétique une ou plusieurs branches de retour avec un ou plusieurs entrefer et un boîtier de transformateur magnéto-conducteur.

9. Véhicule électrique polycourant selon au moins une des revendications 1 à 5, caractérisé par le fait que, dans le cas d'une alimentation en courant continu, les enroulements secondaires (6 à 9) du transformateur (4) sont connectés de manière telle que les courants générés dans les deux branches (56, 57) du transformateur par la circulation du courant continu soient dirigés dans des sens opposés et que l'une des deux branches ou les deux branches (58, 59) du transformateur, lors de l'alimentation en courant continu, soi(en)t décollées des branches (56, 57) du transformateur de manière à former des entrefers (62, 63) qui empêchent une saturation du fer (figure 5).

10. Véhicule électrique polycourant selon au moins une des revendications 1 à 5, caractérisé par le fait que, dans le cas d'une alimentation en courant continu, les enroulements secondaires (6 à 9) du transformateur (4) sont connectés de manière telle que les courants générés dans les deux branches (56, 57) du transformateur par la circulation du courant continu soient dirigés dans des sens opposés et et par le fait que le noyau de fer est divisé en deux parties (69, 70), des entrefers (71, 72) qui empê chent une saturation du fer étant formés entre lesdites parties (figure 6).

11. Véhicule électrique polycourant selon au moins une des revendications 1 à 5, caractérisé par le fait que, dans le cas d'une alimentation en courant continu, les enroulements secondaires (6 à 9) du transformateur (4) sont connectés de manière telle que les courants générés dans chacune des branches (56, 57) du transformateur par la circulation du courant continu soient dirigés dans des sens opposés (figure 7, 8).

12. Véhicule électrique polycourant selon au moins une des revendications 6 à 10, caractérisé par le fait qu'il est prévu un boîtier (64) de transformateur en acier magnétique doté d'une épaisseur de paroi suffisante qui peut recevoir au moins une fraction du retour magnétique sans arriver à saturation.

13. Véhicule électrique polycourant selon au moins une des revendications 6 à 10, caractérisé par le fait qu'il est prévu un boîtier (64) de transformateur en acier magnétique à faible épaisseur de paroi ou en aluminium, des tôles (65) magnéto-conductrices feuilletées supplémentaires étant disposées sur les parois du boîtier, lesquelles tôles reçoivent en fonctionnement en courant continu une fraction au moins du retour magnétique et en fonctionnement en courant alternatif le courant de faite de manière à éviter un échauffement non tolérable du boîtier de transformateur par le courant de fuite (figure 9).

14. Véhicule électrique polycourant selon la revendication 12, caractérisé par le fait que le boîtier de transformateur (64) doté d'une forte épaisseur de paroi pour des raisons magnétiques est agencé sous forme d'élément porteur du véhicule qui peut servir de préférence à la fixation de barres de traction (66, 67) transmettant à la caisse (68) du véhicule les efforts de traction des bogies (DG1, DG2).
